# EUROPEAN PATENT APPLICATION

(11) **EP 4 782 871 A1**
(43) Date of publication of application: **29.07.2026**
(21) Application number: 25153627.2
(22) Date of filing: 23.01.2025
(51) Int. Cl.: G01S 7/02, H04K 3/00, G01S 13/02

(54) **RADAR SYSTEM**

(71) Applicant: NXP B.V., 5656 AG Eindhoven (NL)
(72) Inventor: LUGITSCH, David, 5656 AG Eindhoven (NL); TERTINEK, Stefan, 5656 AG Eindhoven (NL)
(74) Representative: Krott, Michel

(57) **Abstract**

A radar system configured to, based on a predetermined packet interval, from which scheduled packet start times are derived separated by the predetermined packet interval, transmit at least a first and second radar packet wherein: (i) transmission of the first radar packet is delayed by a first delay time from a first scheduled packet start time, and (ii) said transmission of the second radar packet is delayed by a different, second delay time from a second scheduled packet start time, and start sampling of a received signal at a time based on said first delay time to obtain a first sampled signal; and start sampling of a received signal at a time based on said second delay time to obtain a second sampled signal; and process the first and second sampled signals to generate respective CIR information.

## Description

### Field

The present disclosure relates to a radar system and, in particular, to an Ultra Wide Band, UWB, radar system for mitigation against an attacker signal. It also relates to a related method.

### Background

State-of-the-art UWB radar systems generate Channel Impulse Response (CIR) data based on a set of well-known channel sounding sequences. This method has a high sensitivity on the one hand but is inherently insecure on the other hand.

### Summary

According to a first aspect of the present disclosure there is provided a radar system comprising:
one or more processors configured to:
based on predetermined radar parameters including a predetermined packet interval, from which a plurality of scheduled packet start times are derived separated by the predetermined packet interval, provide for transmission of a plurality of radar packets including at least a first radar packet and a second radar packet wherein: (i) said transmission of the first radar packet is delayed by a first delay time from a first of the scheduled packet start times, and (ii) said transmission of the second radar packet is delayed by a different, second delay time from a second of the scheduled packet start times, and
start sampling of a received signal including reflections of said first radar packet at a time based on said first delay time from the first of the scheduled packet start times to obtain a first sampled signal; and
start sampling of a received signal including reflections of said second radar packet at a time based on said second delay time from the second of the scheduled packet start times to obtain a second sampled signal; and
process at least the first sampled signal and the second sampled signal to generate respective channel impulse response information.

In one or more embodiments, the predetermined radar parameters include a predetermined packet duration, and
wherein the sampling of the received signal including reflections of said first radar packet comprises the one or more processors being further configured to stop sampling, to obtain the first sampled signal, after the predetermined packet duration; and
wherein the sampling of the received signal including reflections of said second radar packet comprises the one or more processors being further configured to stop sampling, to obtain the second sampled signal, after the predetermined packet duration.

In one or more embodiments, the predetermined radar parameters include a predetermined packet duration and wherein, based on a respective plurality of scheduled packet end times comprising the respective packet start time plus the predetermined packet duration,
the one or more processors are configured to:
cease said transmission of the first radar packet by a first early-end time before a first of the scheduled packet end times, and
cease said transmission of the second radar packet by a second early-end time before a second of the scheduled packet end times.

In one or more embodiments, each radar packet consists of multiple symbols and the first delay time and the first early-end time, and the second delay time and the second early-end time, are each configured such that a resultant packet duration comprise an integer multiple of a single symbol duration.

In one or more embodiments, wherein the sampling of the received signal including the reflections of said first radar packet comprises the one or more processors being further configured to stop sampling, to obtain the first sampled signal, at the first early-end time before the first of the scheduled packet end times; and
wherein the sampling of the received signal including the reflections of said second radar packet comprises the one or more processors being further configured to stop sampling, to obtain the second sampled signal, at the second early-end time before the second of the scheduled packet end times.

In one or more embodiments, the first early-end time and the second early-end time are different times.

In one or more embodiments, said plurality of radar packets are part of a channel sounding sequence for determining the presence of an object or person within a space.

In one or more embodiments, the first delay time and the different, second delay time are provided to prevent an attacker transmitting a signal with signal content at a desired time to be received as part of the received signals.

In one or more embodiments, the one or more processors are configured to:
determine the presence of an attempted attack by time shifting the first sampled signal by the first delay time and time shifting the second sampled signal by the second delay time and determining the presence of signal energy above a threshold in the time-shifted sampled signals indicative of a target at a constant distance.

In one or more embodiments, the one or more processors are configured to:
determine the presence of an attempted attack by:
sampling the received signal during a period corresponding to the first delay time and the second delay time where no signal content was transmitted and
detecting signal content above a threshold in the received signal during said period.

In one or more embodiments, the predetermined packet duration comprises between 1µs and 1000µs and the first delay time and the second delay time are between 2ns and 1024ns.

In one or more embodiments, the one or more processors are configured to provide for transmission of the first radar packet with a first signal power and the second radar packet with a second, different signal power.

In one or more embodiments, the radar system comprises an Ultra Wide Band, UWB, radar system.

In one or more embodiments, the radar system comprises an automotive radar system.

According to a second aspect of the disclosure we provide a method of operating a radar system comprising:
based on predetermined radar parameters including a predetermined packet interval, from which a plurality of scheduled packet start times are derived separated by the predetermined packet interval, providing for transmission of a plurality of radar packets including at least a first radar packet and a second radar packet wherein: (i) said transmission of the first radar packet is delayed by a first delay time from a first of the scheduled packet start times, and (ii) said transmission of the second radar packet is delayed by a different, second delay time from a second of the scheduled packet start times, and
starting sampling of a received signal including reflections of said first radar packet at a time based on said first delay time from the first of the scheduled packet start times to obtain a first sampled signal; and
starting sampling of the received signal including reflections of said second radar packet at a time based on said second delay time from the second of the scheduled packet start times to obtain a second sampled signal; and
processing at least the first sampled signal and the second sampled signal to generate respective channel impulse response information.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a radar system according to the disclosure;
Figure 2 shows the example radar system implemented as part of an automotive radar system for detecting occupants of a vehicle;
Figure 3 shows a first plot of radar packets illustrating radar packet parameters;
Figure 4 shows a second example plot of radar packets with delay times and early-end times;
Figure 5 shows packet-time plots for a series of radar packets;
Figure 6 shows a first channel impulse response plot of fast-time vs. slow-time for a known radar system experiencing an attack;
Figure 7 shows a second channel impulse response plot of fast-time vs. slow-time for the radar system of the disclosure experiencing an attack; and
Figure 8 shows an example method.

### Detailed Description

Ultra Wide Band, UWB, radar may be used to detect and monitor in-vehicle passenger presence among other uses. For example, UWB may be used to detect a passenger's vital signs such as their respiration rate for purposes of alerting of a left-child. However, the present disclosure is not limited to in-vehicle presence detection and instead relates to a UWB radar system and method for mitigating against attacks that may be performed during a channel sounding sequence or other sequence for presence detection.

In contrast to secure ranging, state-of-the-art UWB radars generate a Channel Impulse Response (CIR) based on a set of well-known channel sounding sequences (provided as a plurality of time-spaced radar packets). This method has a high sensitivity on the one hand but is inherently insecure on the other hand. It is known that a potential attacker can detect and/or predict the channel sounding sequence, packet interval (CIR repetition period), packet duration (CIR estimation length) and carrier frequency.

Given the predictability, an attacker may generate a malicious signal to disrupt normal function of such a UWB radar system, such as in a Child Presence Detection (CPD) scenario to place an imaginary child inside the vehicle by transmitting a "breathing response" matching the parameters mentioned above but from outside the vehicle.

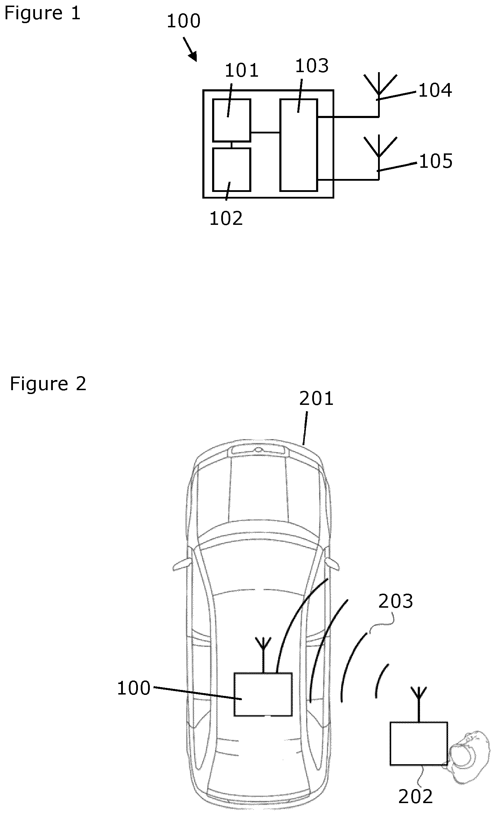

Figure 1 shows an example radar system 100 comprising one or more processors 101 configured to provide for control of the transmission and reception of UWB radar packets or frames. The radar system 100 may further comprise a memory 102 for storing computer program code for execution by the one or more processors 101 in performing the functions described. The radar system may further comprise transmission and receipt circuitry, which may be controlled by the one or more processors for transmitting radar packets and receiving reflections of those packets from an environment via one or more antennas 104, 105.

Figure 2 shows an example implementation of the radar system 100 in a vehicle 201 for use in detecting vehicle occupancy. Thus, the radar system may be for automotive application. Figure 2 also shows an exemplary attack scenario. An attacker 202 records at least two radar packets transmitted by the UWB radar system inside the vehicle 201. Furthermore, the attacker 202 estimates the properties of the radar signal and uses this information to generate an attack signal 203 intended to fool the radar system into identifying a malicious target in the vehicle. This attack signal 203 is transmitted to the UWB radar receiver inside the vehicle 201.

An example radar system and method is proposed to prevent such an attack being effective and, in some embodiments, to detect such an attack.

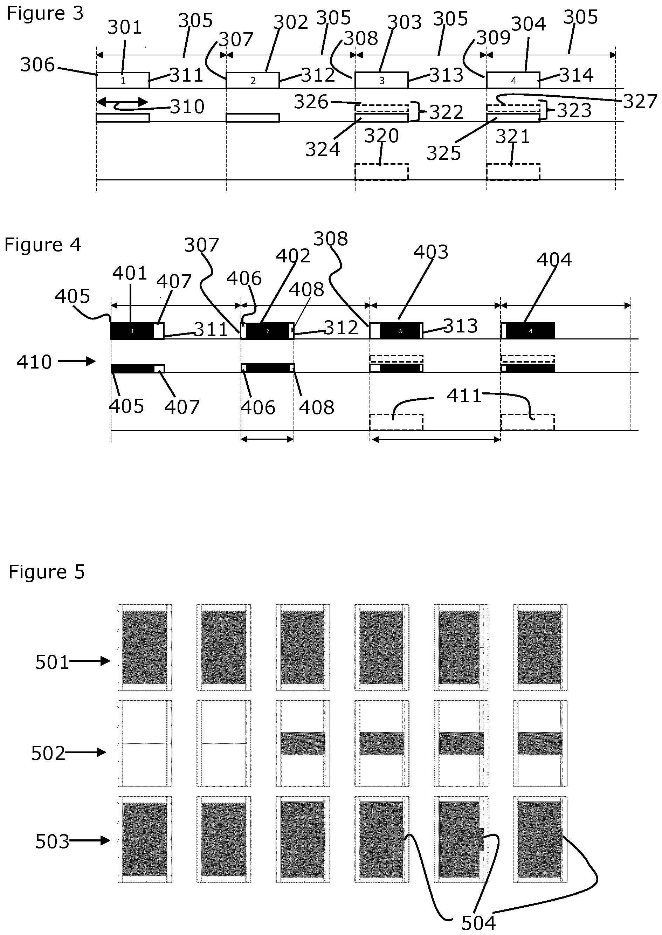

The radar system 100 is configured to operate based on predetermined radar parameters, familiar to those skilled in the art. Thus, with reference to Figure 3 which shows four radar packets 301-304, the radar system 100 may have defined in the memory 102 a predetermined packet interval 305, which defines a fixed time spacing between the transmission of radar packets 301-304. When it is required to transmit the plurality of radar packets 301-304, a plurality of scheduled packet start times 306, 307, 308, 309 can be derived separated by the predetermined packet interval. The predetermined radar parameters may further include a predetermined packet length 310 (only one shown) or duration. Given the predetermined packet interval and the predetermined packet length, it will be appreciated that a schedule of the packet start times and packet end times 311, 312, 313, 314 can be derived defining transmission windows during which the radar packets are transmitted. The radar packets 301-304 may provide the channel sounding sequence. It will be appreciated that the transmission windows may be particular to a channel sounding sequence or other channel impulse response measurement process and at other times the radar system may operate based on other predetermined radar parameters.

During an attack an attacker 202, in order to generate a malicious target, records radar packets 301, synchronizing the clock/carrier signal of their device to the radar system. The attacker then modulates a target response on a plurality of packets 320, 321 based on the recorded packet(s), and transmits this signal with the estimated packet interval. The malicious signal can be constructed to include signal content at a particular time within the packet interval to appear as an object within the vehicle 201 despite the attacker 202 being outside the vehicle. The radar system receives radar signals 322, 323 with the reflected transmitted signal 324, 325 and the malicious signal 326, 327 superimposed.

With reference to Figure 4, the radar system 100 of the disclosure is configured to provide for transmission of a plurality of radar packets 401, 402, 403, 404 including at least a first radar packet 401 and a second radar packet 402, for example.

In the present example, the transmission of the first radar packet 401 is delayed by a first delay time 405 from a first 306 of the scheduled packet start times, although in the present example the first delay time happens to be zero. Likewise, transmission of the second radar packet 402 is delayed by a different, second delay time 406 from a second 307 of the scheduled packet start times.

In the present example, the one or more processors 101 are configured to cease said transmission of the first radar packet 401 by a first early-end time 407 before a first 311 of the scheduled packet end times, and cease said transmission of the second radar packet 402 by a second early-end time 408 before a second 312 of the scheduled packet end times.

The first and second delay times 405, 406 may be random or pseudo-random or otherwise unpredictable by a would-be attacker. Likewise, the early-end times 407, 408 may be random or pseudo-random or otherwise unpredictable by a would-be attacker.

It has been found that by "randomly" varying at least the start time of the radar packet by way of the first and second delay-times, an attacker cannot predict the start time of the radar packet and therefore cannot generate a malicious signal with signal content at the time required to fool the system into determining the presence of an object over multiple channel impulse responses derived from the reflections of the radar packets.

Figure 4 also shows at 410 the radar system 100 configured to provide for sampling of each respective radar packet within, such as exclusively within, its respective transmission window. Figure 4 shows at 411 the transmission of a malicious signal (as represented by 203 in Figure 2). In one or more embodiments, the system 100 is configured to ignore signal content received during any of the first and second delay-times 405, 406 and, if present, the first and second early-end times 407, 408. In other embodiments, the presence of received signal content in the frequency band used by the radar system 100 during any of the first and second delay-times 405, 407 and the first and second early-end times 407, 408 may be used to determine the occurrence of an attack.

Nevertheless, in the present example, the radar system 100 is configured to provide for the starting of the sampling of a received signal including reflections of said first radar packet at a time comprising said first delay time 405 from the first 306 of the scheduled packet start times to obtain a first sampled signal.

Further, the radar system 100 is configured to provide for the starting of the sampling of the received signal including reflections of said second radar packet 402 at a time comprising said second delay time 406 from the second 307 of the scheduled packet start times to obtain a second sampled signal.

The one or more processors 101 are further configured to provide for a stop to sampling, to obtain the first sampled signal, at the first early-end time before the first of the scheduled packet end times. To obtain the second sampled signal, the one or more processors 101 are further configured to provide for a stop to sampling at the second early-end time before the second of the scheduled packet end times.

It will be appreciated that while the present example refers to two radar packets being transmitted and received with the random or unpredictable (to an attacker) delay times and, optionally, early-end times, for brevity, the radar system 100 may be configured to transmit (and receive and sample) more than two such radar packets.

The radar system is further configured to process at least the first sampled signal and the second sampled signal to generate respective channel impulse response information from which, for example, vehicle occupancy can be determined using known methods.

It will be appreciated that the packet interval defines the slow-time sampling period. Despite the use of the delay-times and the early-end times, it has been found that the packet interval can be considered constant for all radar packets allowing for usual processing of the first and second sampled signal. This sampling period typically lies in the millisecond range.

The first and second (and any further) delay time may typically comprise between zero seconds and the required unambiguous distance divided by the speed of light, which is typically in the microsecond range.

The early-end time would typically lie between zero seconds and a multiple of the unambiguous distance divided by the speed of light which is still in the microseconds range. This early-end time is different (random or otherwise unpredictable) for each packet, but the same for transmitting and receiving/sampling for an individual radar packet.

In one or more examples, the predetermined packet length/duration comprises between 1µs and 1000µs and the first delay time and the second delay time are between 2 and 1024ns. The early-end times may be of a similar range.

It will be appreciated that each radar packet may comprise multiple symbols. In some examples, the symbols may be transmitted by multiple signal pulses. The symbols may be predefined symbols, such as a repeating pattern of symbols, as part of a channel sounding sequence. Thus, the system 100 may delay the start of the transmission of the defined symbols or repeating pattern of symbols by the delay times and may end the transmission by the early-end time at a time in the sequence of defined/repeating symbols.

In one or more examples, the first delay time and first early-end time, if present, is configured such that the resulting packet duration is an integer multiple of a single symbol duration. In one or more examples, the second delay time and second early-end time, if present, is configured such that the resulting packet duration is an integer multiple of a single symbol duration. In particular, when high pulse repetition frequency radar ranging/measurement is preformed, correlation artifacts may be mitigated if the packet duration defined by the delay time and the early-end time is an integer multiple of a single symbol duration. In such a case, the random/unpredictable delay and early-end times do not influence the correlation properties of the channel sounding sequence.

In a further example, the early-end time is not provided. Thus, the radar packets are transmitted for the predetermined packet duration. Put another way, the system 100 is configured to provide for transmission beyond the default transmission window by an amount of time equal to the delay-time for each respective packet. Likewise, the one or more processors 101 are further configured to provide for stopping of the sampling of the received signal, to obtain the first sampled signal, after the predetermined packet duration; and stop sampling, to obtain the second sampled signal, after the predetermined packet duration. That is, at the time the predetermined packet duration elapses in one or more examples, rather than at any time after the predetermined packet duration has elapsed.

In some embodiments, the radar system 100 is configured to determine the presence of an attempted attack. This may be achieved in different ways.

For example, Figure 5 shows a first set of radar packets 501 illustrating radar packets transmitted with the early-end times that are unpredictable to the attacker. The shaded areas represent a signal above a threshold. A second set of radar packets 502 illustrates the malicious signal transmitted by the attacker. However, because of the use of the early-end times, an end time of the attacker's signal cannot be controlled to end at the same time as the genuine radar packets 501. Accordingly in the received signals, should sampling be performed beyond the early-end time or packet duration, as per the embodiment, there will be detectable signal content that should not be present. Thus, signal content 504 may be detected and attributed to the presence of an attacker signal by the system 100.

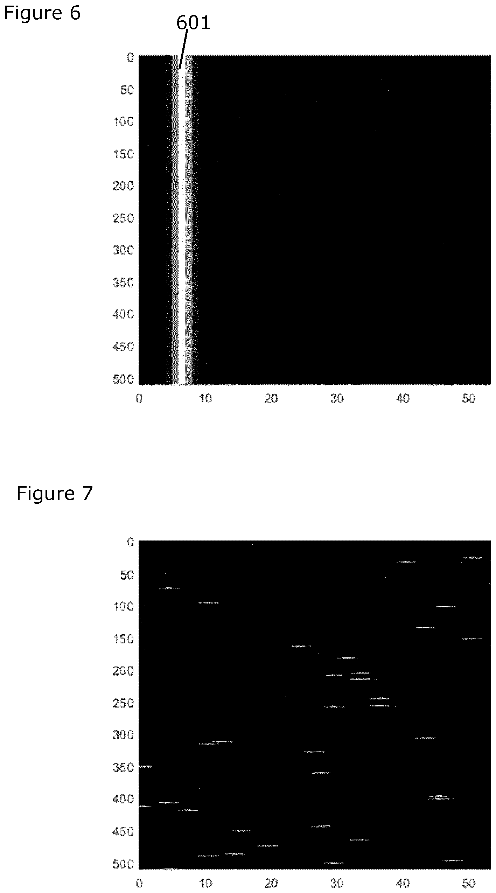

Example figures 6 and 7 illustrate an alternative way of detecting the presence of an attacker signal. Figure 6 shows a slow-time vs. fast-time Channel Impulse Response (CIR) plot (wherein each line, ~500 in number, shows a CIR) without the mitigations provided by the present radar system 100. The attacker is able to place an imaginary object, shown as line 601, at a fast-time index relating to a particular distance.

Figure 7 shows the effect of the delay times described herein. In this plot the attacker signal energy (shown as light shaded dashes on the dark background) is randomly distributed over different fast-time indices because the attacker was unable to predict the delay times and therefore construct a malicious signal that could consistently place an imaginary target at a particular fast-time index.

The radar system 100 may be configured to store a record of the delay times used for transmission of each radar packet. Then, when calculating the channel impulse response, if it is desired to detect the presence of the attack, each sampled signal could be time shifted by its respective recorded delay time. By doing this, the signal energy would appear where the attacker wanted it to appear in the CIR plot. Accordingly, the one or more processors 101 may be configured to determine the presence of an attempted attack by time shifting the first sampled signal by the first delay time and time shifting the second sampled signal by the second delay time and time shifting any further sampled signals by their respective delay time. Then, based on the CIR plot utilising the time-shifted data, the system 100 may determine the presence of signal energy above a threshold in the time shifted sampled signals indicative of a target at a constant distance, such as shown by line 601 in Figure 6.

In one or more examples, the one or more processors 101 are configured to provide for transmission of the first radar packet with a first signal power and the second radar packet with a second, different signal power and, if present, subsequent radar packets with different signal powers. It will be appreciated that the different signal powers are random or otherwise selected to be unpredictable by a would-be attacker. The transmit power in the active transmit time can be randomized, such as in a range of +/-3dB for each radar packet. This power change needs to be reverted at the radar system 100 when sampling the received signal by using a reception gain according to the random but known transmit power. This transmit-power randomization has a minor impact on the amplitude of a valid target in the CIR data but would prevent an attacker to place a malicious target with a constant amplitude in the CIR data.

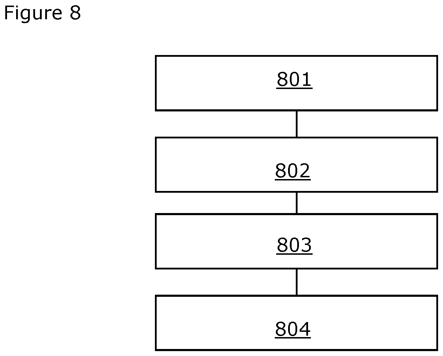

Figure 8 illustrates a method of operating a radar system, such as system 100, comprising:
based on predetermined radar parameters including a predetermined packet interval, from which a plurality of scheduled packet start times are derived separated by the predetermined packet interval, providing 801 for transmission of a plurality of radar packets including at least a first radar packet and a second radar packet wherein: (i) said transmission of the first radar packet is delayed by a first delay time from a first of the scheduled packet start times, and (ii) said transmission of the second radar packet is delayed by a different, second delay time from a second of the scheduled packet start times, and
starting sampling 802 of a received signal including reflections of said first radar packet at a time based on said first delay time from the first of the scheduled packet start times to obtain a first sampled signal; and
starting sampling 803 of the received signal including reflections of said second radar packet at a time based on said second delay time from the second of the scheduled packet start times to obtain a second sampled signal; and
processing 804 at least the first sampled signal and the second sampled signal to generate respective channel impulse response information.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A radar system comprising:
one or more processors configured to:
based on predetermined radar parameters including a predetermined packet interval, from which a plurality of scheduled packet start times are derived separated by the predetermined packet interval, provide for transmission of a plurality of radar packets including at least a first radar packet and a second radar packet wherein: (i) said transmission of the first radar packet is delayed by a first delay time from a first of the scheduled packet start times, and (ii) said transmission of the second radar packet is delayed by a different, second delay time from a second of the scheduled packet start times, and
start sampling of a received signal including reflections of said first radar packet at a time based on said first delay time from the first of the scheduled packet start times to obtain a first sampled signal; and
start sampling of a received signal including reflections of said second radar packet at a time based on said second delay time from the second of the scheduled packet start times to obtain a second sampled signal; and
process at least the first sampled signal and the second sampled signal to generate respective channel impulse response information.

2. The radar system of claim 1, wherein the predetermined radar parameters include a predetermined packet duration, and
wherein the sampling of the received signal including reflections of said first radar packet comprises the one or more processors being further configured to stop sampling, to obtain the first sampled signal, after the predetermined packet duration; and
wherein the sampling of the received signal including reflections of said second radar packet comprises the one or more processors being further configured to stop sampling, to obtain the second sampled signal, after the predetermined packet duration.

3. The radar system of claim 1, wherein the predetermined radar parameters include a predetermined packet duration and wherein, based on a respective plurality of scheduled packet end times comprising the respective packet start time plus the predetermined packet duration,
the one or more processors are configured to:
cease said transmission of the first radar packet by a first early-end time before a first of the scheduled packet end times, and
cease said transmission of the second radar packet by a second early-end time before a second of the scheduled packet end times.

4. The radar system of claim 3, wherein each radar packet consists of multiple symbols and the first delay time and the first early-end time, and the second delay time and the second early-end time, are each configured such that a resultant packet duration comprise an integer multiple of a single symbol duration.

5. The radar system of claim 3 or claim 4,
wherein the sampling of the received signal including the reflections of said first radar packet comprises the one or more processors being further configured to stop sampling, to obtain the first sampled signal, at the first early-end time before the first of the scheduled packet end times; and
wherein the sampling of the received signal including the reflections of said second radar packet comprises the one or more processors being further configured to stop sampling, to obtain the second sampled signal, at the second early-end time before the second of the scheduled packet end times.

6. The radar system of any of claim 3 to 5, wherein the first early-end time and the second early-end time are different times.

7. The radar system of any preceding claim, wherein said plurality of radar packets are part of a channel sounding sequence for determining the presence of an object or person within a space.

8. The radar system of any preceding claim, wherein the first delay time and the different, second delay time are provided to prevent an attacker transmitting a signal with signal content at a desired time to be received as part of the received signals.

9. The radar system of any preceding claim, wherein the one or more processors are configured to:
determine the presence of an attempted attack by time shifting the first sampled signal by the first delay time and time shifting the second sampled signal by the second delay time and determining the presence of signal energy above a threshold in the time-shifted sampled signals indicative of a target at a constant distance.

10. The radar system of any preceding claim, wherein the one or more processors are configured to:
determine the presence of an attempted attack by:
sampling the received signal during a period corresponding to the first delay time and the second delay time where no signal content was transmitted and
detecting signal content above a threshold in the received signal during said period.

11. The radar system of claim 2 or claim 4, wherein the predetermined packet duration comprises between 1µs and 1000µs and the first delay time and the second delay time are between 2ns and 1024ns.

12. The radar system of any preceding claim, wherein the one or more processors are configured to provide for transmission of the first radar packet with a first signal power and the second radar packet with a second, different signal power.

13. The radar system of any preceding claim, wherein radar system comprises an Ultra Wide Band, UWB, radar system.

14. The radar system of any preceding claim, comprising an automotive radar system.

15. A method of operating a radar system comprising:
based on predetermined radar parameters including a predetermined packet interval, from which a plurality of scheduled packet start times are derived separated by the predetermined packet interval, providing for transmission of a plurality of radar packets including at least a first radar packet and a second radar packet wherein: (i) said transmission of the first radar packet is delayed by a first delay time from a first of the scheduled packet start times, and (ii) said transmission of the second radar packet is delayed by a different, second delay time from a second of the scheduled packet start times, and
starting sampling of a received signal including reflections of said first radar packet at a time based on said first delay time from the first of the scheduled packet start times to obtain a first sampled signal; and
starting sampling of the received signal including reflections of said second radar packet at a time based on said second delay time from the second of the scheduled packet start times to obtain a second sampled signal; and
processing at least the first sampled signal and the second sampled signal to generate respective channel impulse response information.

## Amended claims

### Amended claims in accordance with Rule 137(2) EPC.

1. A radar system comprising:
one or more processors configured to:
based on predetermined radar parameters including a predetermined packet interval, from which a plurality of scheduled packet start times are derived separated by the predetermined packet interval, provide for transmission of a plurality of radar packets including at least a first radar packet and a second radar packet wherein: (i) said transmission of the first radar packet is delayed by a first delay time from a first of the scheduled packet start times, and (ii) said transmission of the second radar packet is delayed by a different, second delay time from a second of the scheduled packet start times, and
start sampling of a received signal including reflections of said first radar packet at a time based on said first delay time from the first of the scheduled packet start times to obtain a first sampled signal; and
start sampling of a received signal including reflections of said second radar packet at a time based on said second delay time from the second of the scheduled packet start times to obtain a second sampled signal; and
process at least the first sampled signal and the second sampled signal to generate respective channel impulse response information;
wherein the predetermined radar parameters include a predetermined packet duration and wherein, based on a respective plurality of scheduled packet end times comprising the respective packet start time plus the predetermined packet duration,
the one or more processors are configured to:
cease said transmission of the first radar packet by a first early-end time before a first of the scheduled packet end times, and
cease said transmission of the second radar packet by a second early-end time before a second of the scheduled packet end times.

2. The radar system of claim 1, wherein the predetermined radar parameters include a predetermined packet duration, and
wherein the sampling of the received signal including reflections of said first radar packet comprises the one or more processors being further configured to stop sampling, to obtain the first sampled signal, after the predetermined packet duration; and
wherein the sampling of the received signal including reflections of said second radar packet comprises the one or more processors being further configured to stop sampling, to obtain the second sampled signal, after the predetermined packet duration.

3. The radar system of claim 1, wherein each radar packet consists of multiple symbols and the first delay time and the first early-end time, and the second delay time and the second early-end time, are each configured such that a resultant packet duration comprise an integer multiple of a single symbol duration.

4. The radar system of claim 1 or claim 3,
wherein the sampling of the received signal including the reflections of said first radar packet comprises the one or more processors being further configured to stop sampling, to obtain the first sampled signal, at the first early-end time before the first of the scheduled packet end times; and
wherein the sampling of the received signal including the reflections of said second radar packet comprises the one or more processors being further configured to stop sampling, to obtain the second sampled signal, at the second early-end time before the second of the scheduled packet end times.

5. The radar system of any of claim 1 to 5, wherein the first early-end time and the second early-end time are different times.

6. The radar system of any preceding claim, wherein said plurality of radar packets are part of a channel sounding sequence for determining the presence of an object or person within a space.

7. The radar system of any preceding claim, wherein the first delay time and the different, second delay time are provided to prevent an attacker transmitting a signal with signal content at a desired time to be received as part of the received signals.

8. The radar system of any preceding claim, wherein the one or more processors are configured to:
determine the presence of an attempted attack by time shifting the first sampled signal by the first delay time and time shifting the second sampled signal by the second delay time and determining the presence of signal energy above a threshold in the time-shifted sampled signals indicative of a target at a constant distance.

9. The radar system of any preceding claim, wherein the one or more processors are configured to:
determine the presence of an attempted attack by:
sampling the received signal during a period corresponding to the first delay time and the second delay time where no signal content was transmitted and
detecting signal content above a threshold in the received signal during said period.

10. The radar system of claim 2 or claim 3, wherein the predetermined packet duration comprises between 1µs and 1000µs and the first delay time and the second delay time are between 2ns and 1024ns.

11. The radar system of any preceding claim, wherein the one or more processors are configured to provide for transmission of the first radar packet with a first signal power and the second radar packet with a second, different signal power.

12. The radar system of any preceding claim, wherein radar system comprises an Ultra Wide Band, UWB, radar system.

13. The radar system of any preceding claim, comprising an automotive radar system.

14. A method of operating a radar system comprising:
based on predetermined radar parameters including a predetermined packet interval, from which a plurality of scheduled packet start times are derived separated by the predetermined packet interval, providing for transmission of a plurality of radar packets including at least a first radar packet and a second radar packet wherein: (i) said transmission of the first radar packet is delayed by a first delay time from a first of the scheduled packet start times, and (ii) said transmission of the second radar packet is delayed by a different, second delay time from a second of the scheduled packet start times, and
starting sampling of a received signal including reflections of said first radar packet at a time based on said first delay time from the first of the scheduled packet start times to obtain a first sampled signal; and
starting sampling of the received signal including reflections of said second radar packet at a time based on said second delay time from the second of the scheduled packet start times to obtain a second sampled signal; and
processing at least the first sampled signal and the second sampled signal to generate respective channel impulse response information;
wherein the predetermined radar parameters include a predetermined packet duration and wherein, based on a respective plurality of scheduled packet end times comprising the respective packet start time plus the predetermined packet duration, the method further comprising:
ceasing said transmission of the first radar packet by a first early-end time before a first of the scheduled packet end times, and
ceasing said transmission of the second radar packet by a second early-end time before a second of the scheduled packet end times.
